# EUROPÄISCHE PATENTSCHRIFT

(11) **EP 3 262 211 B1**
(45) Veröffentlichungstag und Bekanntmachung des Hinweises auf die Patenterteilung: **28.08.2019**
(21) Anmeldenummer: 16710104.7
(22) Anmeldetag: 24.02.2016
(51) Int. Cl.: C23F 13/06, C23F 13/16, C04B 28/02, C23F 13/20, C04B 111/94, C04B 111/26

(54) **VERFAHREN ZUM HERSTELLEN EINES KATHODISCHEN KORROSIONSSCHUTZES ZUM SCHUTZ VON BEWEHRUNGSSTAHL IN EINEM STAHLBETONBAUWERK**
METHOD OF PRODUCING CATHODIC CORROSION PROTECTION FOR PROTECTION OF REINFORCING STEEL IN A FERROCONCRETE STRUCTURE
PROCÉDÉ POUR LA FABRICATION D'UNE PROTECTION ANTICORROSION CATHODIQUE POUR LA PROTECTION D'ACIER D'ARMATURE DANS UNE CONSTRUCTION EN BÉTON ARMÉ

(30) Priorität: 25.02.2015 DE 102015203398
(43) Veröffentlichungstag der Anmeldung: 03.01.2018
(73) Patentinhaber: Koch, Detlef, 57223 Kreuztal (DE)
(72) Erfinder: KOCH, Detlef, 57223 Kreuztal (DE); MAHJOORI, Majid, 57080 Siegen (DE)
(74) Vertreter: Tergau & Walkenhorst Patentanwälte PartGmbB
(86) Internationale Anmeldenummer: PCT/EP2016/053876
(87) Internationale Veröffentlichungsnummer: WO 2016/135201

(56) Entgegenhaltungen:
- EP-A1- 1 318 247
- WO-A1-96/35828
- WO-A1-99/19540
- JP-A- 2002 179 454
- US-A- 2 766 130

## Beschreibung

Die Erfindung betrifft ein Verfahren zur Herstellung eines kathodischen Korrosionsschutzes zum Schutz von Bewehrungsstahl in einem Stahlbetonbauwerk.

Bauwerke aus Stahlbeton sind integraler Bestandteil der Infrastruktur in fast allen Ländern der Welt. Neben Wohn- und Arbeitsgebäuden sind auch viele befahrene Bauwerke aus Stahlbeton gebaut, z.B. Parkhäuser, Garagen, Autobahnen, Brücken, Tunnel usw. Eine Großzahl dieser Bauwerke wird 50 bis 100 Jahre (und teilweise noch länger) genutzt. Allerdings setzen neben der mechanischen Beanspruchung vor allem Tausalze den Stahlbeton-Bauwerken zu. Die Tausalze sind in der Regel chloridhaltig. Es entstehen daher in Verbindung mit Wasser Lösungen, die Korrosion in den Bauwerken auslösen. Bei vielen Bauwerken müssen deshalb bereits nach 20-25 Jahren substantielle, kostenintensive Instandsetzungsarbeiten an der Bewehrung durchgeführt werden.

Dazu wird üblicherweise der kontaminierte Überdeckungsbeton abgetragen, der Bewehrungsstahl gereinigt und mit einem neuen Korrosionsschutz versehen (z.B. auf Polymer- oder Zementbasis). Der instandgesetzte Bereich hält häufig jedoch nur wenige Jahre (aufgrund mechanischer, thermischer und/oder hygrischer Inkompatibilitäten), so dass eine zeitnahe weitere Instandsetzung erforderlich wird, gerade dann, wenn der Überdeckungsbeton stark beansprucht wird.

Eine Möglichkeit die Korrosion zu unterdrücken und im Idealfall zu verhindern stellt der kathodische Korrosionsschutz (KKS) von Bauwerken dar.

Durch Anlegung einer kleinen aber dauerhaften Schutzspannung wird die Bildung von Korrosion verhindert. Mittels Fernwartung kann der Zustand des Gebäudes bzw. des Stahlbetonbauwerks dabei überwacht werden. Auf dem Markt befindliche KKS-Anodensysteme können zwar die Korrosion in Stahlbetonbauwerken faktisch zum Erliegen bringen, allerdings lassen die Rissüberbrückungsfähigkeit, Abrasionsfestigkeit und die Rutschhemmung stark zu wünschen übrig. Um eine Befahrbarkeit der Fläche zu erreichen, sowie das weitere Eindringen von Feuchtigkeit und Chloriden zu verhindern, müssen deshalb zusätzliche Oberflächenschutzsysteme aufgebracht werden, die in relativ kleinen, wiederkehrenden Zyklen (etwa alle 10-20 Jahre) erneuert werden müssen.

Die Aufgabe der Erfindung ist daher ein Verfahren zur Herstellung eines kathodischen Korrosionsschutzes zum Schutz von Bewehrungsstahl in einem Stahlbetonbauwerk und insbesondere einen hierzu passenden Mörtel anzugeben, mit dem der Chlorid-induzierten Korrosion ausgesetzte Stahlbetonbauwerke, wie z.B. Garagen, Parkhäuser und Brücken oder aber auch andere Meer-/Salzwasser belastete Bauwerke wie Hafenanlagen oder Schwimmbäder, kathodisch vor Korrosion geschützt werden können. Der Mörtel soll dabei bei beschädigten Bauwerken sowie bei Neubauten verwendet werden können. Neben der Funktionalität für den kathodischen Korrosionsschutz soll der Mörtel in Verbindung mit dem Gewebe auch rissüberbrückend wirken, als statische Verstärkung dienen können und eine hohe Abrasionsfestigkeit sowie eine ausreichende Rutschhemmung aufweisen.

Darüber hinaus soll der kathodische Korrosionsschutz besonders schnell und sowohl bei Neubauten als auch im Rahmen einer Sanierung/Nachrüstung realisiert werden können.

Systeme zum kathodischen Korrosionsschutz sind beispielsweise aus den Druckschriften Wo 99/19540 A1, EP 1 318 247 A1 und WO 96/35828 A1 bekannt.

Die Aufgabe wird erfindungsgemäß gelöst, indem auf den Stahlbeton ein Textilbeton appliziert wird, wobei der Textilbeton ein Carbongewebe und einen Mörtel nach Anspruch 1 oder 3 umfasst, wobei zwischen einer Kathode und einer Anode eine elektrische Dauerspannung angelegt wird und wobei der Bewehrungsstahl als Kathode und das Carbongewebe als Anode verwendet wird.

Vorteilhafte Ausgestaltungen sind Gegenstand der Unteransprüche.

Die Erfindung geht von der Überlegung aus, dass für eine möglichst dünne Mörtel-/Betonschicht, die sowohl als Reprofilierungslage wie auch als Oberflächenschutz appliziert wird, es wünschenswert ist, wenn auf zusätzliche Deckschichten und auch zusätzliche Schichten, die die Anode des kathodischen Korrosionsschutzes aufnehmen, verzichtet werden kann. Dabei wurde erkannt, dass ein solches kompaktes System erreicht werden kann, wenn die Anode bereits Teil der Mörtel- bzw. Betonschicht ist, die über dem zu schützenden Bewehrungsstahl auf der Betonoberfläche appliziert wird. Dies wird ermöglicht, wenn ein Textilbeton mit einem Carbongewebe verwendet wird, wobei im Rahmen des kathodischen Korrosionsschutzes das Carbongewebe als Anode und der Bewehrungsstahl als Kathode verwendet wird.

Weiterhin besteht die Überlegung, dass ein kathodischer Korrosionsschutz dann besonders gut erzielt werden kann, wenn der Mörtel eine ausreichend hohe Leitfähigkeit aufweist. Eine derart hohe Leitfähigkeit ist beispielsweise durch eine entsprechende Menge an Zugabewasser zum Trockenmörtel möglich. Es hat sich allerdings gezeigt, dass eine Erhöhung des Anteils des Zugabewassers die Festigkeit und die Verschleißfestigkeit des Mörtels beeinträchtigt und dieser dann weder für statische Verstärkungen noch für die Anwendung als Textilbeton geeignet ist. Dies führt unter anderem dazu, dass der Mörtel eine zusätzliche Deckschicht benötigt, die nach einiger Zeit aufgrund hoher Beanspruchung wieder abgetragen werden muss. Im Rahmen der Erfindung wurde dabei erkannt, dass eine Zugabe von Zusatzmitteln, die Salze, insbesondere Nitrate, enthalten und/oder kohlenstoffhaltige Zusatzstoffe, insbesondere Carbonfasern und/oder Graphite, ebenfalls dazu geeignet ist, die Leitfähigkeit des Mörtels zu erhöhen, ohne dass der Anteil des Zugabewassers gegenüber anderen Mörteln mit akzeptablen Festigkeiten bzw. Abrasionswerten erhöht werden muss. Dabei hat sich gezeigt, dass trotz des allgemeinen Hintergrundes, dass Salze im Allgemeinen schädlich für die Bausubstanz sind, diese in einer entsprechenden Dosierung und im Rahmen des kathodischen Korrosionsschutzes für die Erhöhung der elektrischen Leitfähigkeit besonders vorteilhaft sind.

Aufgrund von wirtschaftlichen und umweltverträglichen Erwägungen umfassen die Salze in besonders vorteilhafter Ausführung Calcium- und/oder Ammoniumnitrat. Darüber hinaus sind diese eingesetzten Nitrate besonders verträglich mit dem Beton und Stahl. Aufgrund der hygroskopischen Eigenschaften der beiden Nitrate kann der Mörtel auch bei einer niedrigen Umgebungsfeuchtigkeit eine höhere Wassermenge aufnehmen und somit eine ausreichend hohe elektrische Leitfähigkeit ermöglichen.

Für eine optimale elektrische Leitfähigkeit des Mörtels bei gegebenem Wasser-Zement-Verhältnis liegt das Trockengewichtsverhältnis des Zement-Quarzsand-Gemisches und dem Zusatzmittel im Trockenmörtel im Bereich von 0,1% bis 5,5% und in besonders bevorzugter Ausgestaltung im Bereich von 0,7% bis 2,7%. Dadurch kann eine für den kathodischen Korrosionsschutz optimale elektrische Leitfähigkeit des Mörtels erreicht werden.

Um die Festigkeit und Verschleißfestigkeit des Mörtels zu erhöhen, umfasst der Trockenmörtel in vorteilhafter Ausgestaltung einen Hartstoffzuschlag, bevorzugt Siliziumcarbid. Für eine optimale Festigkeit und Verschleißfestigkeit des Mörtels liegt das Trockengewichtsverhältnis des Zement-Quarzsand-Gemisches und des Hartstoffzuschlags im Trockenmörtel in bevorzugter Ausgestaltung im Bereich von 1% bis 34% und in besonders bevorzugter Ausgestaltung im Bereich von 11% bis 20%. Ein deutlich höheres Verhältnis würde dazu führen, dass nicht ausreichend Zementstein zum Einbinden des Zuschlags zur Verfügung steht.

Ein Trockenmörtel, der in Verbindung mit Zugabewasser die oben genannten Eigenschaften erfüllt umfasst in besonders bevorzugter Ausgestaltung

| | **Gewichtsprozent [%]** |
|---|---|
| **Zement** | 25-40, insbesondere 28-32 |
| **Quarzsand** | 30-50, insbesondere 28-45 |
| **nichtquarzitische Zusatzstoffe** | 1-25, insbesondere 5-15 |
| **Trockenanteil eines Fließmittels** | 0,2-4, insbesondere 0,8-1,5 |
| **Entschäumer** | 0,5-4, insbesondere 1-2 |
| **Salze** | 0,1-4, insbesondere 0,5-2 |
| **Luftporenbilder** | 0,1-5, insbesondere 1-3 |
| **Verzögerer** | 0,01-2, insbesondere 0,05-0,2 |
| **Hartstoffzuschlag** | 1-25, insbesondere 8-15 |

Der Quarzsand umfasst dabei in vorteilhafter Ausführung eine Körnung von 0,02 bis 4mm, insbesondere eine Körnung von 0,1 bis 1 mm.

Durch die Zugabe von Salzen und/oder kohlenstoffhaltigen Zusatzstoffen kann eine für den kathodischen Korrosionsschutz ausreichende Leitfähigkeit des Mörtels auch bei einem normalen bzw. eher niedrigen Anteil an Zugabewasser erreicht werden. Das Gewichtsverhältnis zwischen dem Zugabewasser und dem Trockenmörtel liegt im Bereich von 0,08 bis 0,14, in besonders vorteilhafter Ausgestaltung im Bereich von 0,10 und 0,12. Alternativ oder zusätzlich liegt das Gewichtsverhältnis zwischen dem Zugabewasser und dem Zementanteil des Trockenmörtels im Bereich von 0,28 bis 0,4 und in besonders bevorzugter Ausgestaltung im Bereich von 0,35 bis 0,37.

Für eine besonders einfache und verlustfreie Kontaktierung des Carbongewebes werden in bevorzugter Ausgestaltung als Anodenanschluss bzw. Primäranodenkontakt ein mit Mischmetalloxid beschichteter Titandraht, ein Titananodenband und/oder ein leitfähiger Kleber verwendet. Insbesondere die Verwendung eines Mischmetalloxid beschichteten Titananodenbandes als Primäranode für die Einspeisung ist dabei besonders, da ein derartiges Titananodenband bislang nur als Sekundäranode, also als direkt stromabgebende Anode, verwendet wurde.

Bei Stahlbetonbauelementen, die zur Befahrung von Kraftfahrzeugen ausgelegt sind, ist eine ausreichend Verschleißfestigkeit und Rutschhemmung wünschenswert. Hierfür wird dem Mörtel in bevorzugter Ausgestaltung bereits vor der Applikation auf den Stahlbeton und das Carbongewebe ein Hartstoffzuschlag beigemischt. In zusätzlicher oder alternativer Ausgestaltung kann auch direkt nach der Applikation des Mörtels ein solcher Hartstoffzuschlag in die oberen Schichten des Mörtels eingestreut werden.

Die mit der Erfindung erzielten Vorteile bestehen insbesondere darin, dass durch die Zugabe von Salzen auch bei niedrigen Verhältnissen von Zugabewasser zum Trockenmörtel bzw. zum Zementanteil eine ausreichende Leitfähigkeit für den kathodischen Korrosionsschutz bereitgestellt wird. In alternativer oder zusätzlicher Ausgestaltung kann dies auch über die Zugabe von kohlenstoffhaltigen Zusatzstoffen erreicht werden. Durch die Zugabe eines Hartstoffzuschlags kann eine weitere Erhöhung der Festigkeit und/oder Verschleißfestigkeit erreicht werden. Dies ermöglicht es, auf weitere Schutzschichten zu verzichten. Man erhält so einen sehr dünnen Aufbau. Neben Materialeinsparungen und der Reduzierung von Instandsetzungsarbeiten ermöglicht es so, die befahrbare Höhe von Parkhäusern zu optimieren, so dass auch höhere Autos (z.B. SUVs, Kleinbusse) in den Parkhäusern bzw. Garagen parken können. Durch die Einsparung von Reaktionsharzen als Oberflächenschutzsysteme und die verlängerten Lebenszyklen bietet dieses System auch unter ökologischen Gesichtspunkten erhebliche Vorteile.

Ein Ausführungsbeispiel der Erfindung wird anhand einer Zeichnung näher erläutert. Darin zeigt:
Fig. 1 ein Stahlbetonbauwerk auf welches ein Textilbeton als kathodischer Korrosionsschutz appliziert ist,
Fig. 2 ein Carbongewebe mit einem Anodenkontakt.

Gleiche Teile sind in allen Figuren mit denselben Bezugszeichen versehen.

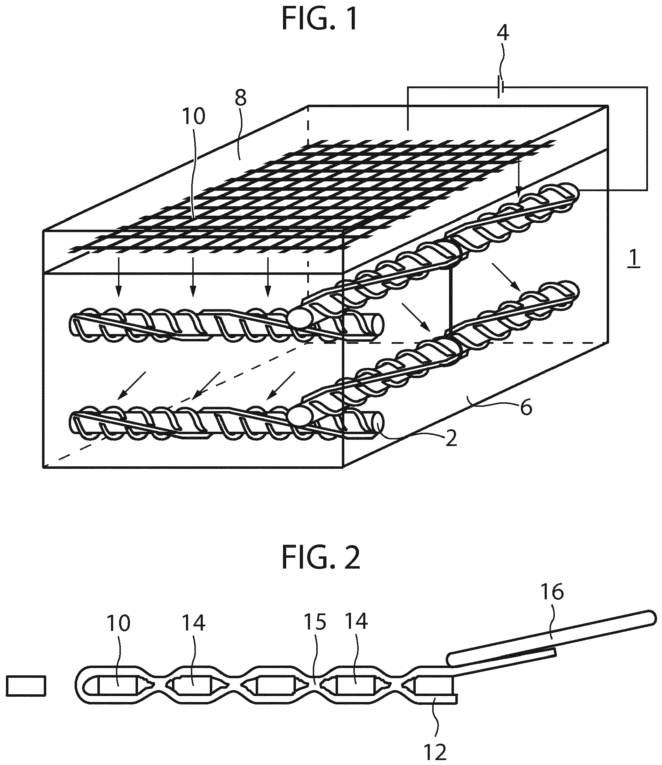

Im Ausführungsbeispiel nach Fig. 1 ist ein Stahlbetonbauwerk 1 dargestellt, wobei die Stahlbewehrung bzw. der Bewehrungsstahl 2 mittels einer angelegten Spannung 4 vor Korrosion geschützt wird. Ein derartiger kathodischer Korrosionsschutz wird nötig, da aufgrund von verschiedenen Prozessen, wie beispielsweise der Carbonatisierung und insbesondere durch die Wirkung von Chloriden, die Passivierung des Bewehrungsstahls 2 lokal aufgehoben werden kann. Als Folge entstehen anodische Bereiche, die eine Metallauflösung zur Folge haben, und kathodische Bereiche, in denen O₂ gebildet wird, was insgesamt zur Ausbildung lokaler Korrosionsherde führt. Beim kathodischen Korrosionsschutz wird zwischen der korrodierenden Bewehrung und einer, mit dem Bauteil verbundenen Anode eine elektrische Spannung angelegt.

Der primäre Schutzeffekt basiert darauf, dass durch die Polarisierung die elektrochemischen Reaktionsgleichgewichte soweit verschoben werden, dass die Materialauflösung in den anodischen Bereichen zugunsten der kathodischen Teilreaktion unterdrückt wird.

Ein weiterer primärer Schutzeffekt kommt dadurch zustande, dass auch die passiven Bereiche der korrodierenden Bewehrung kathodisch polarisiert werden, so dass die treibende Kraft für den Korrosionsprozess fehlt. Während die primären Schutzeffekte sehr schnell zum Tragen kommen, werden die sekundären Schutzeffekte, wie beispielsweise der Anstieg der OH⁻ - Konzentration an der Bewehrungsoberfläche bzw. die Verarmung an Sauerstoff in Bewehrungsnähe als Folge der kathodischen Reaktion sowie der Migration der negativ geladenen Cl⁻ - Ionen in Richtung Anode, erst später wirksam, führen aber dann zu einer Reduktion der Schutzstromdichte.

Im Ausführungsbeispiel nach Fig. 1 wurde auf dem vorhandenen Beton 6 mit Bewehrungsstahl 2 ein Textilbeton 8 mit einem Carbongewebe 10 appliziert. Bevorzugt wird dabei ein Carbongewebe mit einer Maschenweite von etwa 5 - 30 mm verwendet. Dabei können die Maschen quadratisch oder auch rechteckig ausgeführt sein. Das Flächengewicht eines derartigen Carbongewebes liegt vorzugsweise im Bereich von 150-1000 g/m² pro Lage. Je nach gewünschtem statischen Verstärkungsgrad kann das System einlagig oder mehrlagig ausgeführt werden.

Das Carbongewebe 10 dient dabei als Anode für den kathodischen Korrosionsschutz. Der Textilbeton 8 kann dabei, wie in der Fig. 1 dargestellt, auf den bisherigen Stahlbeton 6 aufgetragen werden, so dass durch dieses Verfahren eine Nachrüstung eines kathodischen Korrosionsschutzes bzw. eine Erweiterung des Kathodischen Korrosionsschutzes auf einfachste Art und Weise ermöglicht wird.

Der Textilbeton 8 ist dabei gezielt dazu ausgelegt neben dem Korrosionsschutz noch rissreduzierend bzw. rissverteilend in Verbindung mit einer Rissentkopplung, statisch verstärkend und direkt befahrbar zu sein. Dies bedeutet, dass keine weiteren zusätzlichen Schutzschichten, zum Beispiel auf Polymerbasis, benötigt werden. Dabei erfüllt der Textilbeton 8 zusätzlich Anforderungen an eine hohe Druckfestigkeit für die statische Verstärkung, eine hohe Abrasionsfestigkeit für eine dauerhafte Befahrbarkeit, eine erhöhte Leitfähigkeit im Vergleich zu bisherigen verwendeten Betonarten für einen optimalen kathodischen Korrosionsschutz und eine gute Rutschhemmung für eine Tritt- und Fahrsicherheit. Um dies zu erreichen umfasst der Textilbeton 8 einen Mörtel mit einem der oben genannten Mischungsverhältnisse und Zusatzstoffe bzw. Zusatzmittel. Es ist darüber hinaus ebenso möglich eine bereits beschädigte Stahlbewehrung durch einen derartigen Textilbeton mit einem Carbongewebe zu ersetzen, wodurch sowohl ein erheblicher Arbeits- als auch Kostenaufwand (beispielsweise durch den Wegfall der Freilegung der Stahlbewehrung mittels Hochdruckwasserstrahlen, den Bewehrungsersatz oder der Reprofilierung) entfällt.

Weiterhin kann der Textilbeton 8 eine hohe Haftzugfestigkeit zur Einleitung der Kräfte in den Untergrund, eine hohe Biegezugfestigkeit für die statische Verstärkung und Rissüberbrückung, ein geringes Schwinden zur Vermeidung von Eigenspannungen im ausgehärteten Zustand, eine gute Benetzung des Gewebes 10 für die statische Verstärkung, Rissüberbrückung und den kathodischen Korrosionsschutz und eine gute Verarbeitbarkeit in Form eines selbstnivellierenden Fließmörtels, für eine besonders leichte Applikation des Mörtels in geringen Schichtdicken und die Einbettung des Carbongewebes 10 ohne Aufschwimmen bereitstellen.

Wie der Fig. 1 zu entnehmen ist, wird an das Carbongewebe 10 und den Bewehrungsstahl 2 über eine Spannungsquelle 4 eine Dauerspannung angelegt, um den kathodischen Korrosionsschutz zu gewährleisten. Aufgrund der Verwendung eines engmaschigen Carbongewebes 10 und der dadurch vorhandenen großen Oberfläche, kann die Spannung im Gegensatz zu sonst üblichen Systemen für den kathodischen Korrosionsschutz kleiner gehalten werden. So sind üblicherweise etwa bis zu 10 V, bevorzugt etwa 4-5V während der gesamten Überwachung dauerhaft angelegt. Diese Spannung kann über ein nicht dargestelltes Fernüberwachungssystem kontrolliert werden, sodass der Zustand des Bauwerkes bzw. der Stahlbetonkonstruktion erfasst und fortlaufend überwacht werden kann. Es ist dabei möglich die Korrosion über den angelegten Strom oder insbesondere über die Spannung zu regeln. Erst wenn trotz einer Erhöhung der Spannung die Schutzwirkung nicht erreicht wird und die Spannungsgrenze, die zu einem Versagen der Anode führen würde, erreicht ist, müssen vor Ort, also direkt am Stahlbeton weitere Maßnahmen getroffen werden. Dabei kann beispielsweise durch eine Erhöhung der Anodenfläche, also insbesondere auch durch die Verwendung eines engmaschigeren Carbongewebes 10 der kathodische Korrosionsschutz verbessert werden Es ist ebenso denkbar, dass die Luftfeuchtigkeit im Bereich des Stahlbetons erhöht wird, um die Leitfähigkeit des Betons zu erhöhen.

Eine mögliche Kontaktierung des Carbongewebes 10 ist im Ausführungsbeispiel nach Fig. 2 dargestellt. Dabei wird ein Titananodenband 12 um eine Anzahl von Carbongewebefasern 14 gelegt und in den Zwischenräumen der Carbongewebefasern 14 verschweißt. Durch das Verschweißen des Titananodenbandes 12 wird das Gewebe 10 derart fest an das Titanband 12 gepresst, dass eine gute elektrische Leitfähigkeit sichergestellt wird. Dadurch entsteht ein stabiles, nur unter großen Zugkräften lösbares und eng anliegendes Geflecht aus dem Titananodenband 12 und dem Carbongewebe 10. Das Titananodenband 12 ist dabei mit einem Mischmetalloxid beschichtet, um eine besonders hohe Oxidationsbeständigkeit zu erreichen. Dies verhindert ein schnelles oxidieren in der Mörtelschicht und somit einen Verlust der elektrischen Leitfähigkeit des Titananodenbandes als Einspeisepunkt.

Das Ende des Titananodenbandes 12 ragt über das Carbongewebe 10 hinaus und bildet eine Anschlussmöglichkeit für einen Primäranodendraht 16. Dieser Primäranodendraht 16 ist im Ausführungsbeispiel nach der Fig. 2 ebenfalls aus Titan und wird an dem überstehenden Ende des Titananodenbandes 12 angeschweißt.

Der Anschluss des Primäranodendrahtes 16 an die weiteren Kupferdrahtleitungen kann dann nach gängigen Normen und Vorgaben erfolgen. So kann eine besonders einfache Kontaktierung des Carbongewebes 10 erreicht werden. In alternativer oder zusätzlicher Ausgestaltung kann auch ein leitfähiger Kleber verwendet werden, um einen elektrischen Kontakt zwischen dem Primäranodendraht 16 und dem Carbongewebe 10 herzustellen.
Für den Einsatz im Rahmen des kathodischen Korrosionsschutzes sind weiterhin noch Fernüberwachungsmodule, Auswerte-, Überwachungs-, Steuer- und/oder Anzeigeeinheiten vorgesehen, die vor Ort und/oder in der Fernüberwachungszentrale angeordnet sein können. Weitere Sensoren zur Messung der Korrosion oder des Zustandes des Stahlbetons sind im oder am Beton verbaut und mit den Auswerte- Überwachungs-, Steuer- und/oder Anzeigeeinheiten verbunden.

### Bezugszeichenliste

- 1: Stahlbetonbauwerk
- 2: Bewehrungsstahl
- 4: Spannungsquelle
- 6: Beton
- 8: Textilbeton
- 10: Carbongewebe
- 12: Titananodenband
- 14: Carbongewebefaser
- 16: Primäranodendraht

## Patentansprüche

1. Verfahren zum Herstellen eines kathodischen Korrosionsschutzes zum Schutz von Bewehrungsstahl (2) in einem Stahlbetonbauwerk (1) auf welches ein Textilbeton (8) appliziert wird, wobei der Textilbeton (8) ein Carbongewebe (10) und einen Mörtel umfasst,
wobei zwischen einer Kathode und einer Anode eine elektrische Dauerspannung angelegt wird,
und wobei der Bewehrungsstahl (2) als Kathode und das Carbongewebe (10) als Anode verwendet wird,
**dadurch gekennzeichnet, dass** das Carbongewebe eine Maschenweite von 5 bis 30 mm aufweist
und der Mörtel einen Trockenmörtel, umfassend einen Zementanteil, und Zugabewasser umfasst, wobei das Gewichtsverhältnis zwischen dem Zugabewasser und dem Trockenmörtel im Bereich von 0,08 bis 0,14 und/oder das Gewichtsverhältnis zwischen dem Zugabewasser und dem Zement im Bereich von 0,28 bis 0,4 liegt
und wobei der Trockenmörtel ein Zement-Quarzsandgemisch und ein Zusatzmittel zur Erhöhung der elektrischen Leitfähigkeit des Mörtels umfasst,
wobei das Zusatzmittel Salze umfasst und das Trockengewichtsverhältnis zwischen dem Zement-Quarzsand-Gemisch und dem Zusatzmittel zur Erhöhung der elektrischen Leitfähigkeit im Trockenmörtel im Bereich von 0,1 % bis 5,5% liegt.

2. Verfahren zum Herstellen eines kathodischen Korrosionsschutzes nach Anspruch 1, **dadurch gekennzeichnet, dass**
das Trockengewichtsverhältnis zwischen dem Zement-Quarzsand-Gemisch und dem Zusatzmittel zur Erhöhung der elektrischen Leitfähigkeit im Trockenmörtel im Bereich 0,7% bis 2,7% liegt.

3. Verfahren zum Herstellen eines kathodischen Korrosionsschutzes zum Schutz von Bewehrungsstahl (2) in einem Stahlbetonbauwerk (1) auf welches ein Textilbeton (8) appliziert wird, wobei der Textilbeton (8) ein Carbongewebe (10) und einen Mörtel umfasst,
wobei zwischen einer Kathode und einer Anode eine elektrische Dauerspannung angelegt wird,
und wobei der Bewehrungsstahl (2) als Kathode und das Carbongewebe (10) als Anode verwendet wird,
**dadurch gekennzeichnet, dass** das Carbongewebe eine Maschenweite von 5 bis 30 mm aufweist
und der Mörtel einen Trockenmörtel, umfassend einen Zementanteil, und Zugabewasser umfasst, wobei das Gewichtsverhältnis zwischen dem Zugabewasser und dem Trockenmörtel im Bereich von 0,08 bis 0,14 und/oder das Gewichtsverhältnis zwischen dem Zugabewasser und dem Zement im Bereich von 0,28 bis 0,4 liegt
und wobei der Trockenmörtel ein Zement-Quarzsandgemisch und einen kohlenstoffhaltigen Zusatzstoff zur Erhöhung der elektrischen Leitfähigkeit des Mörtels umfasst, wobei der Zusatzstoff Carbonfasern und/oder Graphite umfasst.

4. Verfahren zum Herstellen eines kathodischen Korrosionsschutzes nach einem der Ansprüche 1 bis 3, **dadurch gekennzeichnet, dass**
das Gewichtsverhältnis zwischen dem Zugabewasser und dem Trockenmörtel im Bereich 0,10 bis 0,12 liegt und/oder das Gewichtsverhältnis zwischen dem Zugabewasser und dem Zement im Bereich 0,35 bis 0,37 liegt.

5. Verfahren zum Herstellen eines kathodischen Korrosionsschutzes nach einem der Ansprüche 1 bis 4, **dadurch gekennzeichnet, dass**
der Trockenmörtel einen Hartstoffzuschlag zur Erhöhung der Festigkeit und/oder Verschleißfestigkeit des Mörtels umfasst, wobei der Hartstoffzuschlag Siliziumcarbid umfasst.

6. Verfahren zum Herstellen eines kathodischen Korrosionsschutzes nach Anspruch 5, **dadurch gekennzeichnet, dass**
das Trockengewichtsverhältnis zwischen dem Zement-Quarzsand-Gemisch und dem Hartstoffzuschlag zur Erhöhung der Festigkeit und/oder Verschleißfestigkeit im Trockenmörtel im Bereich von 1% bis 34%, bevorzugt im Bereich 11% bis 20% liegt.

7. Verfahren zum Herstellen eines kathodischen Korrosionsschutzes nach Anspruch 1, **dadurch gekennzeichnet, dass**
der Trockenmörtel
- 25-40 Gewichtsprozent, insbesondere 28 - 32 Gewichtsprozent Zement,
- 30-50 Gewichtsprozent, insbesondere 38 - 45 Gewichtsprozent Quarzsand mit einer Körnung von 0,02-4mm, insbesondere 0,1 - 1mm,
- 1-25 Gewichtsprozent, insbesondere 5 - 15 Gewichtsprozent nichtquarzitischer Zusatzstoffe,
- 0,2 - 4 Gewichtsprozent, insbesondere 0,8 - 1,5 Gewichtsprozent Trockenanteil eines Fließmittels,
- 0,5 - 4 Gewichtsprozent, insbesondere 1 - 2 Gewichtsprozent Entschäumer
- 0,1 - 4 Gewichtsprozent, insbesondere 0,5 - 2 Gewichtsprozent Salze
- 0,1 - 5 Gewichtsprozent, insbesondere 1 - 3 Gewichtsprozent Luftporenbilder
- 0,01 - 2 Gewichtsprozent, insbesondere 0,05 - 0,2 Gewichtsprozent Verzögerer und
- 1 - 25 Gewichtsprozent, insbesondere 8 - 15 Gewichtsprozent Hartstoffzuschlag
umfasst.

8. Verfahren zum Herstellen eines kathodischen Korrosionsschutzes nach einem der Ansprüche 1 bis 7, **dadurch gekennzeichnet, dass** die Kontaktierung des Carbongewebes (10) mittels eines mit Mischmetalloxid beschichteten Titandrahtes (12) und/oder eines leitfähigen Klebers als Anodenanschluss bzw. Primäranodenkontakt (16) vorgenommen wird.

9. Verfahren zum Herstellen eines kathodischen Korrosionsschutzes nach einem der Ansprüche 1 bis 8, **dadurch gekennzeichnet, dass** ein Hartstoffzuschlag dem Mörtel beigemischt und/oder in den Mörtel eingestreut wird, wobei der Hartstoffzuschlag Siliciumcarbid umfasst.

## Claims

1. Method for producing cathodic protection for protecting reinforcing steel (2) in a reinforced concrete structure (1) to which a textile-reinforced concrete (8) is applied, wherein the textile-reinforced concrete (8) comprises a carbon fabric (10) and a mortar, wherein a continuous electrical voltage is applied between a cathode and an anode, and wherein the reinforcing steel (2) is used as the cathode and the carbon fabric (10) is used as the anode, **characterised in that** the carbon fabric has a mesh size of from 5 to 30 mm and the mortar comprises a dry mortar, comprising a cement proportion, and mixing water, the weight ratio between the mixing water and the dry mortar being in the range of from 0.08 to 0.14 and/or the weight ratio between the mixing water and the cement being in the range of from 0.28 to 0.4, and the dry mortar comprising a cement-quartz sand mixture and an admixture for increasing the electrical conductivity of the mortar, the admixture comprising salts and the dry weight ratio between the cement-quartz sand mixture and the admixture for increasing the electrical conductivity in the dry mortar being in the range of from 0.1% to 5.5%.

2. Method for producing cathodic protection according to claim 1, **characterised in that** the dry weight ratio between the cement-quartz sand mixture and the admixture for increasing the electrical conductivity in the dry mortar is in the range of from 0.7% to 2.7%.

3. Method for producing cathodic protection for protecting reinforcing steel (2) in a reinforced concrete structure (1) to which a textile-reinforced concrete (8) is applied, wherein the textile-reinforced concrete (8) comprises a carbon fabric (10) and a mortar, wherein a continuous electrical voltage is applied between a cathode and an anode, and wherein the reinforcing steel (2) is used as the cathode and the carbon fabric (10) is used as the anode, **characterised in that** the carbon fabric has a mesh size of from 5 to 30 mm and the mortar comprises a dry mortar, comprising a cement portion, and mixing water, the weight ratio between the mixing water and the dry mortar being in the range of from 0.08 to 0.14 and/or the weight ratio between the mixing water and the cement being in the range of from 0.28 to 0.4, and the dry mortar comprising a cement-quartz sand mixture and a carbon-containing additive for increasing the electrical conductivity of the mortar, the additive comprising carbon fibres and/or graphite.

4. Method for producing cathodic protection according to any of claims 1 to 3, **characterised in that** the weight ratio between the mixing water and the dry mortar is in the range of from 0.10 to 0.12 and/or the weight ratio between the mixing water and the cement is in the range of from 0.35 to 0.37.

5. Method for producing cathodic protection according to any of claims 1 to 4, **characterised in that** the dry mortar comprises a hard aggregate for increasing the strength and/or wear resistance of the mortar, the hard aggregate comprising silicon carbide.

6. Method for producing cathodic protection according to claim 5, **characterised in that** the dry weight ratio between the cement-quartz sand mixture and the hard aggregate for increasing the strength and/or resistance to wear in the dry mortar is in the range of from 1% to 34%, preferably in the range of from 11% to 20%.

7. Method for producing cathodic protection according to claim 1, **characterised in that** the dry mortar comprises:
- 25-40 wt.%, in particular 28-32 wt.% cement,
- 30-50 wt.%, in particular 38-45 wt.% quartz sand having a grain size of 0.02-4 mm, in particular 0.1-1 mm,
- 1-25 wt.%, in particular 5-15 wt.% non-quarzitic additives,
- 0.2-4 wt.%, in particular 0.8-1.5 wt.% dry matter of a superplasticizer,
- 0.5-4 wt.%, in particular 1-2 wt.% defoamer,
- 0.1-4 wt.%, in particular 0.5-2 wt.% salts,
- 0.1-5 wt.%, in particular 1-3 wt.% air-entraining agent,
- 0.01-2 wt.%, in particular 0.05-0.2 wt.% retarder, and
- 1-25 wt.%, in particular 8-15 wt.% hard aggregate.

8. Method for producing cathodic protection according to any of claims 1 to 7, **characterised in that** the the carbon fabric (10) is contacted by means of a titanium wire (12) coated with mixed metal oxide and/or a conductive adhesive as the anode connection and the primary anode contact (16).

9. Method for producing cathodic protection according to any of claims 1 to 8, **characterised in that** a hard aggregate is admixed to the mortar and/or spread in the mortar, the hard aggregate comprising silicon carbide.

## Revendications

1. Procédé pour la fabrication d'une protection anticorrosion cathodique pour la protection d'acier d'armature (2) dans une construction en béton armé, sur laquelle un béton textile (8) est appliqué, le béton textile (8) comprenant un tissu carbon (10) et un mortier,
dans lequel une tension électrique permanente est appliquée entre une cathode et une anode,
et dans lequel l'acier d'armature (2) est utilisé comme cathode et le tissu carbon (10) est utilisé comme anode,
**caractérisé en ce que** le tissu carbon (10) a une ouverture de maille von 5 à 30 mm et le mortier comprend un mortier sec, comprenant une fraction de ciment, et de l'eau ajoutée, le rapport du poids entre l'eau ajoutée et le mortier sec se trouvant dans la gamme de 0,08 à 0,14 et/ou le rapport du poids entre l'eau ajoutée et le ciment se trouvant dans la gamme de 0,28 à 0,4,
et dans lequel le mortier sec comprend un mélange ciment/sable silicieux et un adjuvant pour augmenter la conductibilité électrique du mortier, l'adjuvant comprenant des sels et le rapport du poids à l'état sec entre le mélange ciment/sable silicieux et l'adjuvant se trouvant dans la gamme de 0,1 % à 5,5 % pour augmenter la conductibilité électrique dans le mortier sec.

2. Procédé pour la fabrication d'une protection anticorrosion cathodique selon la revendication 1, **caractérisé en ce que**
le rapport du poids à l'état sec entre le mélange ciment/sable silicieux et l'adjuvant se trouvant dans la gamme de 0,7 % à 2,7 % pour augmenter la conductibilité électrique dans le mortier sec.

3. Procédé pour la fabrication d'une protection anticorrosion cathodique pour la protection d'acier d'armature (2) dans une construction en béton armé, sur laquelle un béton textile (8) est appliqué, le béton textile (8) comprenant un tissu carbon (10) et un mortier,
dans lequel une tension électrique permanente est appliquée entre une cathode et une anode,
et dans lequel l'acier d'armature (2) est utilisé comme cathode et le tissu carbon (10) est utilisé comme anode,
**caractérisé en ce que** le tissu carbon (10) a une ouverture de maille von 5 à 30 mm et le mortier comprend un mortier sec, comprenant une fraction de ciment, et de l'eau ajoutée, le rapport du poids entre l'eau ajoutée et le mortier sec se trouvant dans la gamme de 0,08 à 0,14 et/ou le rapport du poids entre l'eau ajoutée et le ciment se trouvant dans la gamme de 0,28 à 0,4,
et dans lequel le mortier sec comprend un mélange ciment/sable silicieux et un adjuvant carboné pour augmenter la conductibilité électrique du mortier, l'adjuvant étant des fibres carbonées et/ou des graphites.

4. Procédé pour la fabrication d'une protection anticorrosion cathodique selon l'une quelconque des revendications 1 à 3, **caractérisé en ce que**
le rapport du poids entre l'eau ajoutée et le mortier sec se trouve dans la gamme de 0,10 à 0,12 et/ou le rapport du poids entre l'eau ajoutée et le ciment se trouve dans la gamme de 0,35 à 0,37.

5. Procédé pour la fabrication d'une protection anticorrosion cathodique selon l'une quelconque des revendications 1 à 4, **caractérisé en ce que**
le mortier sec comprend un agrégat de substance dure pour augmenter la résistance méchanique et/ou la résistance à l'usure du mortier, l'agrégat de substance dure comprenant du carbide de silicium.

6. Procédé pour la fabrication d'une protection anticorrosion cathodique selon la revendication 5, **caractérisé en ce que**
le rapport du poids à l'état sec entre le mélange ciment/sable silicieux et l'agrégat de substance dure pour augmenter la résistance méchanique et/ou la résistance à l'usure dans le mortier sec se trouve dans la gamme de 1 % à 34 %, de préférence dans la gamme de 11 % à 20 %.

7. Procédé pour la fabrication d'une protection anticorrosion cathodique selon la revendication 1, **caractérisé en ce que**
le mortier sec comprend
- 25 - 40 pourcents en poids, en particulier 28 - 32 pourcents en poids, de ciment,
- 30 - 50 pourcents en poids, en particulier 38 - 45 pourcents en poids, de sable silicieux d'une grosseur de grain de 0,02 - 4 mm, en particulier 0,1 - 1 mm,
- 1 - 25 pourcents en poids, en particulier 5 - 15 pourcents en poids, d'adjuvants non quartzitiques,
- 0,2 - 4 pourcents en poids, en particulier 0,8 - 1,5 pourcents en poids, de la fraction sèche d'un dissolvant,
- 0,5 - 4 pourcents en poids, en particulier 1 - 2 pourcents en poids, d'agent antimoussant,
- 0,1 - 4 pourcents en poids, en particulier 0,5 - 2 pourcents en poids, de sels,
- 0,1 - 5 pourcents en poids, en particulier 1 - 3 pourcents en poids, d'entraîneur d'air,
- 0,01 - 2 pourcents en poids, en particulier 0,05 - 0,2 pourcents en poids, d'agent retardateur et
- 1 - 25 pourcents en poids, en particulier 8 - 15 pourcents en poids, d'agrégat de substance dure.

8. Procédé pour la fabrication d'une protection anticorrosion cathodique selon l'une quelconque des revendications 1 à 7, **caractérisé en ce que** l'établissement des contacts du tissu carboné (10) est effectué au moyen d'un fil de titanium (12) revêtu d'un oxyde métallique mélangé et/ou au moyen d'une colle servant de borne d'anode ou de contact primaire d'anode (16).

9. Procédé pour la fabrication d'une protection anticorrosion cathodique selon l'une quelconque des revendications 1 à 8, **caractérisé en ce que**
un agrégat de substance dure est ajouté au mortier et/ou répandu dans le mortier, l'agrégat de substance dure comprenant du carbide de silicium.
